# EUROPÄISCHE PATENTSCHRIFT

(11) **EP 1 332 662 B1**
(45) Veröffentlichungstag und Bekanntmachung des Hinweises auf die Patenterteilung: **13.08.2008**
(21) Anmeldenummer: 03000927.8
(22) Anmeldetag: 16.01.2003
(51) Int. Cl.: A01D 75/20, A01D 34/416

(54) **Vorrichtung zum Rasentrimmen**
Lawn trimmer
Tondeuse à fil

(30) Priorität: 30.01.2002 DE 10204537
(43) Veröffentlichungstag der Anmeldung: 06.08.2003
(73) Patentinhaber: GARDENA Manufacturing GmbH, 89079 Ulm (DE)
(72) Erfinder: Kohl, Peter, 89257 Illertissen (DE); Locher, Ottmar, 89079 Ulm-Donaustetten (DE)
(74) Vertreter: Patentanwälte Ruff, Wilhelm, Beier, Dauster & Partner

(56) Entgegenhaltungen:
- EP-A- 0 646 311
- DE-U- 8 712 133
- DE-U- 20 110 470
- GB-A- 2 255 265
- GB-A- 2 285 380
- US-A- 4 890 389
- US-A- 5 010 720
- US-A- 5 048 187
- US-A- 5 060 383
- US-A- 5 996 234

## Beschreibung

Die Erfindung betrifft eine Vorrichtung zum Rasentrimmen mit einem unter einer Schutzhaube rotierenden Schneidfaden, dessen Rotationsbereich auf der von einer Bedienungsperson abgewandten Seite einen Abschnitt aufweist, der nicht von der Schutzhaube, jedoch von einem Schutzbügel überdeckt ist, der in einer Betriebsstellung mit einem kreisbogenförmigen Teil etwa oberhalb des Umfanges des Rotationsbereiches des Schneidfadens verläuft, wobei der Schutzbügel in einer Ruhestellung nicht oder nur wenig über den Rand der Schutzhaube vorsteht.

Eine derartige Vorrichtung zum Rasentrimmen ist aus der GB-A-2295380 bekannt. Der bekannte Rasentrimmer weist einen unter einer Schutzhaube rotierenden Schneidfaden auf, dessen Rotationsbereich auf einer von einer Bedienungsperson abgewandten Seite einen durch einen Schutzbügel überdeckten Abschnitt aufweist. Der Schutzbügel ist zwischen einer Betriebsstellung, in der er im radialen Abstand zu der Schutzhaube nach außen abragt, und einer Ruhestellung verlagerbar, in der der Schutzbügel nur wenig über den Rand der Schutzhaube vorsteht.

Weitere Vorrichtungen zum Rasentrimmen sind bekannt. Der Schutzbügel übernimmt dabei die Aufgabe, den Schnittkreis des Schneidfadens für die Bedienungsperson visuell zu markieren. Er kann zusätzlich zum Schutz von Pflanzen, Gegenständen, etc. vor dem Schneidfaden vorgesehen sein. Ein gewisser Nachteil des Schutzbügels ist dabei in dem relativ grossen Platzbedarf des über den Rand der Schutzkante hinausstehenden Schutzbügels zu sehen, der für einen Transport der Vorrichtung hinderlich ist.

Bekannt ist es auch bei solchen Vorrichtungen zum Rasentrimmen an der Schutzhaube eine Schneidklinge anzubringen, die dazu dient den sich automatisch, oder auch durch die Bedienungsperson ausgelöst, aus einer Fadenkassette nachspeisenden Schneidfaden auf eine bestimmte Länge abzuschneiden. Eine solche automatische Fadennachführung tritt üblicherweise dann in Kraft, wenn beispielsweise durch einen Bruch des Schneidfadens die freifliegende Länge des Schneidfadens zu kurz wird. Für solche Schneidklingen-Anordnungen ist auch schon vorgeschlagen worden durch Verstellung der Schneidklinge die freifliegende Länge des Schneidfadens auf ein unterschiedliches Mass zu bringen, was beispielsweise dadurch möglich ist, dass die Schneidklinge um ein relativ geringes Mass von beispielsweise maximal 3 cm in radialer Richtung auf unterschiedliche Positionen verstellt wird. Solche Lösungen können hilfreich sein in bezug auf die Drehzahl des Schneidfadens, dessen Schneidleistung und schliesslich für dessen Lebensdauer. Wird jedoch durch die Verkürzung oder Verlängerung des freifliegenden Schneidfaden-Endes der Rotationsbereich im Durchmesser verkleinert oder vergrössert, dann bietet der eingangs erwähnte Schutzbügel, der in der Regel nur in einer Betriebsstellung festlegbar ist, keine zuverlässige Markierung des Schneidbereiches mehr.

Der vorliegenden Erfindung liegt daher zunächst die Aufgabe zugrunde, nach einer Lösung zu suchen, bei der der Raumbedarf des Schutzbügels für einen Transport so gering wie möglich ist.

Diese Aufgabe wird dadurch gelöst, dass der Schutzbügel mit seinem ersten Ende an der Schutzhaube an zwei Befestigungsstellen anbringbar ist, von denen eine so angeordnet ist, dass der Schutzbügel seine Betriebsstellung einnimmt und die andere für die Ruhestellung zu der der Bedienungsperson zugewandten Seite versetzt ist. Das Gerät ist in dieser Lage kompakt und raumsparend, beispielsweise für einen Transport oder dgl. ausgebildet.

In einer Ausgestaltung der Erfindung kann das erste Ende des Schutzbügels dabei an einem Ende eines schwenkbar auf der Schutzhaube angeordneten Hebels angelenkt sein, der bei seiner Verschwenkung eine Verstellung des Schutzbügels zwischen Betriebs- und Ruhestellung bewirkt. Ist bei einer solchen Ausgestaltung der Schutzbügel als Bügelfeder ausgebildet, dann kann er mit dazu dienen den Hebel in seinen beiden Endstellungen festzuhalten, wobei der Hebel um mehr als 180 DEG in seine jeweils in einer Übertotpunktlage liegenden Endstellung verschwenkbar ist. Diese Ausgestaltung ermöglichst es der Bedienungsperson in sehr einfacher Weise den Schutzbügel aus seiner Betriebsstellung in die Ruhestellung zu bringen. Das erste Bügelende braucht bei dieser Ausführungsform nicht aus einer Befestigungsstellung herausgezogen und in eine zweite eingeführt zu werden.

Die Bügelverstellung durch Umklappen des ersten Endes des Bügels über den Schwenkhebel ergibt in der Schutzstellung zum einen eine visuelle Markierung des Schnittkreises (mit geringem Übermass) sowie einen Schutz höherer Pflanzen, wie Blumenstängel, Sträucher oder Bäume, welche von dem Mähvorgang nicht betroffen werden sollen. In der inaktiven Stellung kann dann auch höheres Schnittgut, insbesondere solches, welches sich in der aktiven Stellung durch den Bügelnicht ohne weiteres niederdrücken lässt, problemlos gemäht werden.

In Weiterbildung der Erfindung und zur Lösung der Aufgabe für den Fall unterschiedlich grosser Schneidkreis-Durchmesser den Schutzbügel als Schutz für den Schneidfaden und insbes, auch als Markierung für den Schneidbereich zu benutzen, kann das zweite Ende des Schutzbügels exzentrisch an einer Schwenkeinrichtung für ein Schneidmesser angebracht sein, mit der das Schneidmesser dem rotierenden Ende des Schneidfadens auf unterschiedlich grossen Radien zugeordnet ist, so dass sich der kreisbogenförmige Teil des Schutzbügels den unterschiedlichen Schneidkreis-Durchmessern anpasst. Durch diese Ausgestaltung wird mit einer Umstellung der Schneidklinge und einer dadurch bewirkten Veränderung des Schnittkreisradius automatisch auch eine Verstellung des Verlaufs des Schutzbügels bewirkt. Die Bedienungsperson braucht lediglich ein Bedienelement, beispielsweise einen Drehknopf, zu betätigen, so dass zum einen eine unterschiedliche Position des Schneidmessers und zum anderen aber auch die Anpassung des Schutzbügelverlaufs an den, durch die unterschiedliche Einstellung des Schneidmessers bewirkten Schneidkreis-Durchmesser erfolgt. Diese Ausgestaltung kann auch unabhängig von der Verstellmöglichkeit des ersten Endes des Schutzbügels vorgesehen werden.

In Weiterbildung der Erfindung kann die Schwenkeinrichtung zur Einstellung des Schneidmessers in seinen beiden Positionen um 180 DEG verdrehbar und jeweils in den beiden Endstellungen verrastbar ausgebildet sein. Auch das zweite Schutzbügel-Ende wird dann in den jeweiligen Raststellungen in einer bestimmten Lage gehalten, wobei die Exzentrizität der Anbringung des Schutzbügel-Endes massgebend ist für den Betrag der Verstellung des Schutzbügels. In weiterer Ausgestaltung der Erfindung kann die Schwenkeinrichtung als ein Drehknopf ausgebildet sein, der unter Federkraft verrastbar ist. Eine besonders einfache Ausführungsform ergibt sich dabei, wenn der Drehknopf gegen Federkraft axial verschiebbar ausgebildet und über axiale Raststellen gehalten ist. Durch Druck auf den Drehknopf kann dann in einfacher Weise die Verrastung gelöst und die notwendige 180 DEG Verdrehung in die zweite Stellung des Schneidmessers durchgeführt werden, wonach der Drehknopf wieder einrastet. Der Drehknopf kann mit einer exzentrischen Befestigungsstelle für das Bügelende versehen sein, die vorteilhaft drehbar an einer exzentrisch an dem Drehknopf vorgesehenen Hülse oder einem Zapfen angeordneten Scheibe vorgesehen wird. Bei einer Verdrehung des Drehknopfes verdreht sich auch die Scheibe, so dass das Bügelende auf der gleichen Seite der Drehachse des Drehknopfes verbleibt, aber in seine zweite Stellung gebracht wird. Es ist in Ausgestaltung der Erfindung aber auch möglich die Befestigungsstelle als einen exzentrisch am Drehknopf angeordneten Zapfen auszubilden, um den das zu einer Lasche umgebogene Ende des Bügels gelegt ist. Das zweite Bügelende wird dann bei der Drehbewegung des Drehknopfes im Halbkreis in seine neue Endlage geführt. In Weiterbildung der Erfindung kann das zweite Ende des Schutzbügels im Endbereich des kreisbogenförmigen Teils des Schutzbügels vorgesehen sein, während das erste Ende an einem vom kreisbogenförmigen Teil radial nach innen abgewinkelten Bügelschenkel vorgesehen ist, der den Abstand zur Schutzhaube überbrückt. Bei einer solchen Ausführungsform kann die Schutzhaube im Bereich des ersten Endes des Schutzbügels auch eine Ausnehmung aufweisen, die mit dem Bügelschenkel, an dem das erste Ende angeordnet ist, einen Bereich abgrenzt, in dem der Schneidfaden weder von der Schutzhaube noch vom Bügel überdeckt ist. Dies kann Vorteile beim Arbeiten mit dem Rasentrimmer bringen.

Die Erfindung ist anhand von Ausführungsbeispielen in der Zeichnung dargestellt und wird im Folgenden erläutert. Es zeigen:
- Fig. 1: Eine Draufsicht auf den vorderen, von einer Bedienungsperson abgewandten Teil des Arbeitskopfes eines Fadenschneiders nach der Erfindung,
- Fig. 2: eine Teilansicht des Arbeitskopfes der Fig. 1 von unten,
- Fig. 3: den Teilschnitt durch Fig. 1 längs der Linie III-III,
- Fig. 4: eine Draufsicht ähnlich Fig. 1 auf einen Arbeitskopf in einer anderen Ausführungsform der Erfindung,
- Fig. 5: einen Teilschnitt durch Fig. 4 längs der Schnittlinie V-V,
- Fig. 6: den Teilschnitt durch Fig. 5 längs der Linie VI-VI und
- Fig. 7: den Schnitt durch den Drehknopf der Fig. 5 in Richtung der Schnittlinie VII-VII.

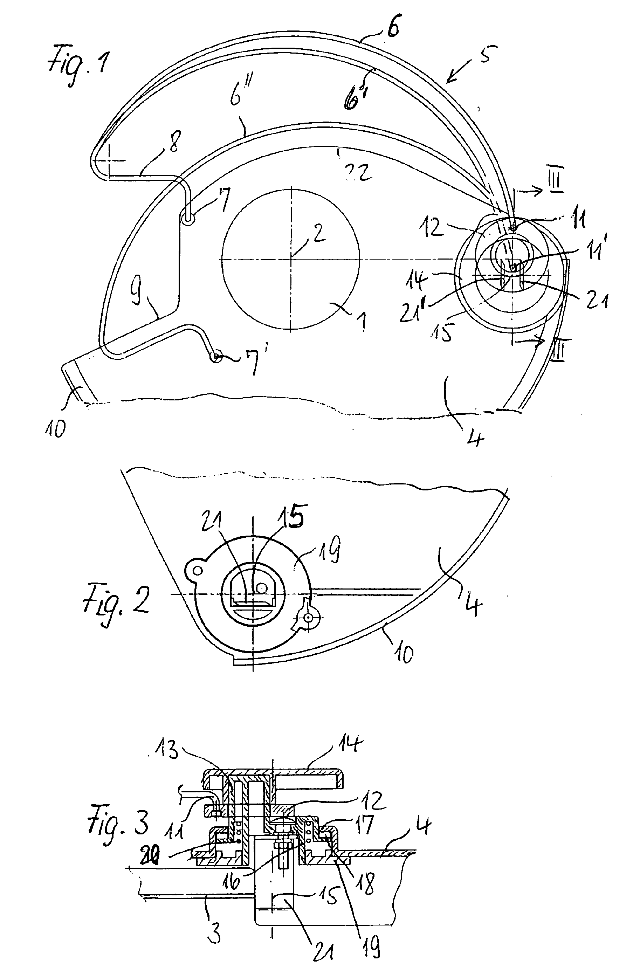

In der Fig. 1 ist der vordere Teil des Arbeitskopfes einer Fadenschneidvorrichtung zu erkennen, die in nicht näher gezeigter, weil bekannter Weise, eine motorgetriebene Fadenkassette 1 aufweist, die um die Achse 2 rotiert. Das freie Ende 3 des Schneidfadens, das in Fig. 3 zu erkennen ist rotiert mit der Fadenkassette 1 um die Achse 2 und beschreibt dabei eine kreisförmige Schneidfläche, die zum einen von einer Schutzhaube 4 und zum anderen von einem Schutzbügel 5 überdeckt ist, der als Drahtbügel ausgebildet ist und einen kreisbogenförmigen Teil 5a aufweist, der in etwa dem Umfang des Schneidkreises folgt, der vom freien Ende des Schneidfadens durchlaufen wird. Der Schutzbügel 5 ist mit seinem ersten Ende 7 an der Oberseite der Schutzhaube 4 in eine entsprechende Öffnung drehbar eingehängt. Von hieraus führt ein vom kreisbogenförmigen Teil 6 aus radial nach innen abgewinkelter Schenkel 8 nach außen. Die Schutzhaube 4 weist im Bereich des befestigten ersten Endes des Schutzbügels einen winkelförmigen Einschnitt 9 auf und geht dann in einen kreisbogenförmig um die Drehachse 2 verlaufenden Rand 10 über, der nicht vollständig dargestellt ist. Dieser Rand 10 ist der Bedienungsperson zugewandt, die den Arbeitskopf mit der Schutzhaube 4 an einer nicht gezeigten Führungsstange halten und auch den Antrieb für die Fadenkassette 1 steuern kann.
Wie ohne weiteres erkennbar wird, stellt der Schutzbügel 5 mit seinem kreisbogenförmigen Teil 6 für die Bedienungsperson eine visuelle Markierung des äußeren Bereiches der Schneidfläche dar. Gleichzeitig dient der Schutzbügel 5 aber auch dazu, eine Berührung des rotierenden Fadenendes mit festen Hindernissen, beispielsweise Baumstämmen oder Randeinfassungen zu verhindern. Im Bereich des Einschnittes 9, der an der gegenüberliegenden Seite durch den Schenkel 8 des Schutzbügels 5 begrenzt ist, ist das Ende des Schneidfadens frei und lässt sich daher beliebig nahe an Strauchstämme oder dgl. heranführen, um auch dort Rasen entsprechend schneiden zu können.
Das zweite Ende 11 des Schutzbügels 5 ist an einer Ringscheibe 12 eingehängt, die drehbar mit einer Hülse 13 eines Drehknopfes 14 verbunden ist. Die Hülse 13 ist dabei exzentrisch zur Drehachse 15 des Drehknopfes 14 angeordnet und der Drehknopf 14 ist mit einem drehbaren Grundkörpers 16 ausgerüstet, der in einer Aussparung 17 der Schutzhaube 4 angeordnet ist. Die Ausnehmung 17 und der Grundkörper 16 sind jeweils mit axial verlaufenden Rastvorsprüngen 18 versehen und es ist zumindest ein von unten an die Schutzhaube 4 angeschraubter Zentrierkörper 19 vorgesehen, der zum einen die notwendige Führung für die Drehbewegung des Grundkörpers 16 und des damit verbundenen Drehknopfes 14 gibt, zum anderen aber auch zur Abstützung einer Druckfeder 20 dient, die den Grundkörper 16 mit seinen Rastvorsprüngen 18 in die von der Ausnehmung 17 nach unten offenen Gegenraststellen drückt. Die Raststellen sind so ausgebildet, dass eine Verdrehung des Drehknopfes 14 um 180° möglich ist, ehe der Drehknopf 14, wenn kein Druck mehr auf ihn ausgeübt wird, in einer seiner Endstellungen verrastet. Zur Entrastung wird auf den Drehknopf 14 gedrückt, so dass die Vorsprünge 18 sich entkuppeln und die Drehbewegung möglich wird. Fest mit dem Grundkörper 16 verbunden ist über eine Schraubbefestigung ein Schneidmesser 21, dass exzentrisch zu Drehachse 15 des Drehknopfes 14 angeordnet ist und dazu dient das freiumlaufende Ende des Schneidfadens auf eine bestimmte Länge abzuschneiden.
Mit Hilfe des Drehknopfes 14 kann die Lage des Schneidmessers 21 verändert werden. In Fig. 1 ist die zweite Endlage 21' des Schneidmessers 21 angedeutet, die sich bei einer 180° Verdrehung des Drehknopfes 14 ergibt. In dieser Stellung wird das freie Endes des Schneidfadens auf eine kürzerer Länge abgeschnitten. Der Schneidkreis-Durchmesser des Gerätes verringert sich dadurch. Dies hat verschiedene Vorteile hinsichtlich Drehzahl, Schnittleistung und Lebensdauer des Schneidfadens.

Da das zweite Ende 11 des Schutzbügels 5 über die Scheibe 12 mit dem Drehknopf 14 gekoppelt ist, wird dieses zweite Ende 11 bei einer Verdrehung des Drehknopfes 14 um 180° wegen der Exzentrizität der Scheibenführung 12 in die Lage 11' (Fig. 1) gebracht, so dass der kreisbogenförmige Teil 6 des Schutzbügels 5 dadurch in die in Fig. 1 eingezeichnete Lage 6' gebracht wird, in der dieser kreisbogenförmige Teil sich nunmehr - zumindest zum Teil - dem kleiner gewordenen Schneidkreis des kürzeren rotierenden Fadenendes in etwa anpasst. Durch die Verstellung des Schneidmessers 21 in eine von zwei möglichen Stellungen, in denen das Schneidmesser jeweils tangential zum Schneidkreis verläuft, wird auf diese Weise automatisch auch die Anpassung des Schutzbügels 5 an den größeren oder kleineren Schneidkreis-Durchmesser bewirkt. Eine äußerst einfache Handhabung ist daher für die Bedienungsperson möglich.

Es ist schließlich auch noch möglich das erste Ende 7 des Schutzbügels 5 in eine weiter zu der Bedienungsseite hin versetzte Öffnung in der Schutzhaube einzusetzen, so dass das erste Ende des Schutzbügels 5 die Stellung 7' einnimmt. In dieser Stellung verläuft der kreisbogenförmige Teil 6 des Schutzbügels 5 in seiner Lage 6" ganz nahe am Außenrand 22 der Schutzhaube. In dieser Ruhestellung des Schutzbügels 5 nimmt das Gerät daher weniger Platz ein und kann zu Transportzwecken besser verstaut werden. Die Ruhestellung des Schutzbügels 5 kann auch in an sich bekannter Weise zum Rasenkantenschneiden mit vertikal ausgerichteter Schneidebene benutzt werden. Je nach Wahl der Befestigungsstelle für das erste Ende 7' wäre es natürlich auch denkbar den Schutzbügel vollkommen innerhalb der Schutzhaube 4 verlaufen zu lassen.

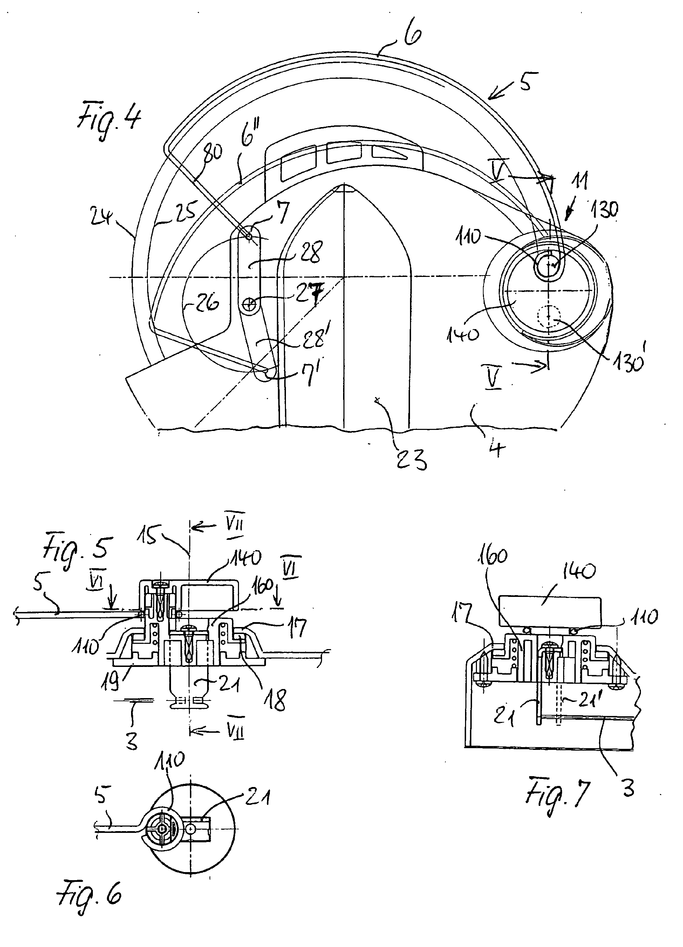

In der Ausführungsform der Fig. 4 bis 7, die im Wesentlichen gleich aufgebaut ist, wobei gleiche Teile auch die gleichen Referenznummern erhalten haben, ist eine Vereinfachung der Bügeleinhängung insofern vorgenommen worden, als das zweite Bügelende zu einer Schlaufe 110 gebogen ist, die unmittelbar um den Exzenterzapfen 130 gelegt ist, welche der Exzenterhülse 13 der ersten Ausführungsform funktionsmäßig entspricht. Auch dieser Exzenterzapfen ist Teil eines Drehknopfes 140, der um die Achse 15 um 180° in zwei Endstellungen verstellbar ist, wobei auch hier die Verrastung durch Vorsprünge 18 bzw. 17 des axial verschiebbaren Drehknopfes 140 erfolgt.

Die Fig. 4 lässt noch einen Teil des Führungsschaftes für den Arbeitskopf erkennen und zeigt vor allen Dingen durch die beiden parallel zueinander verlaufenden Kreislinien 24 und 25 jeweils die äußere Begrenzung der Schneidfläche bei kürzerem Schneidfaden-Ende (Linie 25) bzw. bei längerem Schneidfaden-Ende (Linie 24). Es ist zu erkennen, dass der kreisbogenförmige Teil 6 des Schutzbügels 5 in der ersten Stellung in etwa parallel zu der Kreiskontur 24 verläuft. Wie im Ausführungsbeispiel der Fig. 1 wird bei einer 180° Verdrehung des Drehknopfes 140 der Exzenterzapfen in die zweite Endlage 130' gebracht, wodurch sich der kreisbogenförmige Teil 6 des Schutzbügels 5, zumindest in seinem in der Figur rechtsliegenden Bereich, ebenfalls eng an die Kreiskontur 25 anpassen kann.
Die Fig. 5 und 7 zeigen im übrigen, dass der Grundkörper 160 eine etwas andere Formgestaltung als der Grundkörper 16 der Führungsform der Fig. 1 hat. Prinzipiell bestehen hinsichtlich der Funktion aber keine Unterschiede. Das Schneidmesser 21 ist am Grundkörper 160 einseitig zur Drehachse 15 angeschraubt und lässt sich daher, wie in Fig. 7 gezeigt, in zwei Endstellungen bringen.

Die Fig. 4 zeigt eine Ausführungsform der Erfindung, mit der der Schutzbügel in einfacher Weise in seine Ruhestellung 6" gebracht werden kann. Das erste Ende 7 des Schutzbügel, das auch bei dieser Ausführungsform am Ende des rechtwinklig abgewinkelten Schenkels 80 des Bügelteiles 6 angeordnet ist, ist hier nicht in eine Öffnung der Schutzhaube 4 eingesteckt, sondern gelenkig am freien Ende eines um die Achse eines an der Schutzhaube 4 angebrachten Bolzens 27 um mehr als 180° im Sinn des Kreisbogens 26 gegen Uhrzeigersinn verschwenkbar. Das erste freie Ende 7 wird daher von diesem Hebel 28 in seine Lage 7' mitgenommen, in der der kreisbogenförmige Teil des Schutzbügels 5 eine ähnliche Lage 6" einnimmt wie in der Fig. 1. Die Verstellung des Schutzbügels 5 aus der Betriebslage 6 in die Ruhestellung 6" ist allerdings für die Bedienungsperson wesentlich einfacher. Da der Schutzbügel 5, wenn er als Drahtbügel ausgebildet ist, gewisse Federeigenschaften aufweist, wird es auf diese Weise auch möglich den Hebel 28 in seinen beiden Endlagen 28 bzw. 28' durch die Federkraft des Bügels 5 zu halten. Der Hebel 28 wird nämlich jeweils in eine Übertotpunktlage gebracht und kann beispielsweise in seinen beiden Endlagen an einem Anschlag anliegen. Besondere Rast- oder Feststellelemente sind daher nicht erforderlich.

## Patentansprüche

1. Vorrichtung zum Rasentrimmen mit einem unter einer Schutzhaube (4) rotierenden Schneidfaden (3), dessen Rotationsbereich (24, 25) auf der von einer Bedienungsperson abgewandten Seite einen Abschnitt aufweist, der nicht von der Schutzhaube, jedoch von einem Schutzbügel (5) überdeckt ist, der in einer Betriebsstellung mit einem kreisbogenförmigen Teil (6) etwa oberhalb des Umfang des Rotationsbereiches des Schneidfadens (3) verläuft, wobei der Schutzbügel (5) in einer Ruhestellung (6") nicht oder nur wenig über den Rand der Schutzhaube (4) vorsteht, **dadurch gekennzeichnet, dass** ein erstes Ende (7) des Schutzbügels (5) an zwei Befestigungsstellen an der Schutzhaube (4) festlegbar ist, von denen eine so angeordnet ist, dass der Schutzbügel seine Betriebsstellung einnimmt und die andere für die Ruhestellung (6") zu der der Bedienungsperson zugewandten Seite verlegt ist.

2. Vorrichtung nach Anspruch 1, **dadurch gekennzeichnet, dass** das erste Ende (7) des Schutzbügels (5) an einem Ende eines schwenkbar auf der Schutzhaube (4) angeordneten Hebels (28) angelenkt ist, der bei seiner Verschwenkung eine Verstellung des Schutzbügels (5) zwischen Betriebs- und Ruhestellung bewirkt.

3. Vorrichtung nach Anspruch 2, **dadurch gekennzeichnet, dass** der Schutzbügel als Bügelfeder ausgebildet ist und den Hebel (28) in beiden Endstellungen hält.

4. Vorrichtung nach Anspruch 3, **dadurch gekennzeichnet, dass** der Hebel (28) um mehr als 180° in seine jeweils in Übertotpunktlagen liegenden Endstellungen schwenkbar ist.

5. Vorrichtung insbesondere nach Anspruch 1, **dadurch gekennzeichnet, dass** der Schutzbügel (5) mit seinem zweiten Ende (11) exzentrisch an einer Schwenkeinrichtung (14) für ein Schneidmesser (21) angebracht ist, mit der das Schneidmesser dem rotierenden Ende des Schneidfadens (3) auf unterschiedlich großen Radien zugeordnet ist, so dass sich der kreisbogenförmige Teil (6) des Schutzbügels den unterschiedlichen Schneidkreis-Durchmessern anpasst.

6. Vorrichtung nach Anspruch 5, **dadurch gekennzeichnet, dass** die Schwenkeinrichtung (14) um 180° drehbar und jeweils in beiden Endstellungen verrastbar ist.

7. Vorrichtung nach Anspruch 5, **dadurch gekennzeichnet, dass** die Schwenkeinrichtung ein Drehknopf (14, 140) ist, der unter Federkraft in beiden Endstellungen verrastbar ist.

8. Vorrichtung nach Anspruch 7, **dadurch gekennzeichnet, dass** der Drehknopf gegen Federkraft axial verschiebbar ist und unter Federkraft mit axialen Rastvorsprüngen (18) in der jeweiligen Endlage sicherbar ist.

9. Vorrichtung nach Anspruch 7, **dadurch gekennzeichnet, dass** der Drehknopf (14) mit einer exzentrischen Befestigungsstelle für das zweite Bügelende (11) versehen ist.

10. Vorrichtung nach Anspruch 9, **dadurch gekennzeichnet, dass** die Befestigungsstelle aus einer gelenkigen Einhängung besteht, die an einer drehbar an einer exzentrisch am Drehknopf (14) angebrachten Hülse angeordneten Scheibe (12) vorgesehen ist.

11. Vorrichtung nach Anspruch 9, **dadurch gekennzeichnet, dass** zur Befestigung des zweiten Bügelendes (11) ein exzentrisch angeordneter Zapfen (130) vorgesehen ist, um den das zu einer Lasche (110) umgebogene Ende des Bügels (5) herumgelegt ist.

12. Vorrichtung nach Anspruch 5, **dadurch gekennzeichnet, dass** das zweite Ende (11) des Schutzbügels (5) im Endbereich des kreisbogenförmigen Teils (6) vorgesehen ist, während das erste Ende (7) an einem vom kreisbogenförmigen Teil (6) radial nach innen abgewinkelten Schenkel (8, 80) vorgesehen ist, der den Abstand zur Schutzhaube (4) überbrückt.

13. Vorrichtung nach Anspruch 12, **dadurch gekennzeichnet, dass** die Schutzhaube (4) im Bereich des ersten Endes (7) des Schutzbügels einen winkelförmigen Einschnitt (9) aufweist, der mit dem Bügelschenkel (8), an dem das erste Ende (7) angeordnet ist, einen Bereich abgrenzut, in dem der Schneidfaden nicht überdeckt ist.

## Claims

1. Device for lawn trimming with a cutting cord (3) rotating under a protective cover (4) and whose rotation area (24, 25) has on the side remote from an operator a section which is covered not by the protective cover but instead by a hoop guard (5), which in its operating position runs with a circular arc-shaped part (6) somewhat above the periphery of the rotation area of cutting cord (3), where in a neutral position (6") the hoop guard (5) does not or only slightly projects beyond the edge of the protective cover (4), **characterized in that** a first end (7) of the hoop guard (5) can be fixed at two fixing points to the protective cover (4), whereof one is so positioned that the hoop guard assumes its operating position and the other for the neutral position (6") is displaced towards the side facing the operator.

2. Device according to claim 1, **characterized in that** the first end (7) of hoop guard (5) is articulated to one end of a lever (28) pivotably placed on the protective cover (4) and which during its pivoting brings about an adjustment of the hoop guard (5) between the operating and neutral positions.

3. Device according to claim 2, **characterized in that** the hoop guard is constructed as a bow spring and holds the lever (28) in both end positions.

4. Device according to claim 3, **characterized in that** the lever (28) can be pivoted by more than 180° into its end positions in each case located in beyond dead centre positions.

5. Device, particularly according to claim 1, **characterized in that** the second end (11) of hoop guard (5) is eccentrically fitted to a pivoting device (14) for a cutting blade (21) with which the cutting blade is associated with the rotating end of cutting cord (3) for radii of different magnitude, so that the circular arc-shaped part (6) of the hoop guard is adapted to the different cutting circle diameters.

6. Device according to claim 5, **characterized in that** the pivoting device (14) is rotatable by 180° and can in each case be locked in both end positions.

7. Device according to claim 5, **characterized in that** the pivoting device is a rotary knob (14, 140), which can be locked by spring tension in both end positions.

8. Device according to claim 7, **characterized in that** the rotary knob can be axially displaced counter to spring tension and can be secured in the given end position under spring tension with axial locking projections (18).

9. Device according to claim 7, **characterized in that** the rotary knob (14) is provided with an eccentric fixing point for the second guard end (11).

10. Device according to claim 9, **characterized in that** the fixing point comprises an articulated suspension, which is provided on a disk (12) arranged in rotary manner on a sleeve fitted eccentrically to rotary knob (14).

11. Device according to claim 9, **characterized in that** for fixing the second guard end (11) is provided an eccentrically positioned stud (130) around which is placed the end of guard (5) bent round to form a strap (110).

12. Device according to claim 5, **characterized in that** the second end (11) of hoop guard (5) is provided in the end region of the circular arc-shaped part (6), whereas the first end (7) is provided on a sidepiece (8, 80) angled radially inwards from the circular arc-shaped part (6) and which bridges the spacing to the protective cover (4).

13. Device according to claim 12, **characterized in that**, in the vicinity of the first hoop guard end (7), protective cover (4) has an angular notch (9), which with the guard sidepiece (8) on which the first end (7) is located defines an area in which the cutting cord is not covered.

## Revendications

1. Dispositif pour couper le gazon avec un fil coupant (3) tournant sous un capot de protection (4) dont la zone de rotation (24, 25) présente sur la face opposée à un opérateur une section qui n'est pas recouverte par le capot de protection mais par un étrier de protection (5) qui s'étend, en position de fonctionnement, avec une partie (6) en forme d'arc de cercle un peu au-dessus de la périphérie de la zone de rotation du fil coupant (3), l'étrier de protection (5) ne débordant pas ou seulement peu du bord du capot de protection (4) en position de repos (6"), **caractérisé en ce qu'**une première extrémité (7) de l'étrier de protection (5) peut être fixée à deux zones de fixation sur le capot de protection (4) dont l'une est disposée de telle sorte que l'étrier de protection adopte sa position de fonctionnement et l'autre est déplacée pour la position de repos (6") vers la face tournée vers l'opérateur.

2. Dispositif selon la revendication 1, **caractérisé en ce que** la première extrémité (7) de l'étrier de protection (5) est articulée à une extrémité d'un levier (28) disposé à pivotement sur le capot de protection (4) qui assure un déplacement de l'étrier de protection (5) entre une position de fonctionnement et une position de repos lors de son pivotement.

3. Dispositif selon la revendication 2, **caractérisé en ce que** l'étrier de protection est conçu comme un ressort d'étrier et maintient le levier (28) dans les deux positions de fin de course.

4. Dispositif selon la revendication 3, **caractérisé en ce que** le levier (28) peut pivoter de plus de 180° dans ses positions de fin de course situées respectivement dans les positions des points réversibles.

5. Dispositif, en particulier selon la revendication 1, **caractérisé en ce que** l'étrier de protection (5) est appliqué avec sa deuxième extrémité (11) de manière excentrique sur un dispositif de pivotement (14) pour une lame de coupe (21), avec lequel la lame de coupe est affectée à l'extrémité rotative du fil coupant (3) sur des rayons de taille différente de telle sorte que la partie (6) en forme d'arc de cercle de l'étrier de protection soit adaptée aux différents diamètres du rayon de coupe.

6. Dispositif selon la revendication 5, **caractérisé en ce que** le dispositif pivotant (14) peut tourner de 180° et peut respectivement se bloquer dans les deux positions de fin de course.

7. Dispositif selon la revendication 5, **caractérisé en ce que** le dispositif pivotant est un bouton rotatif (14, 140) qui peut être encliqueté sous l'action d'un ressort dans les deux positions de fin de course.

8. Dispositif selon la revendication 7, **caractérisé en ce que** le bouton rotatif peut se déplacer axialement contre la force du ressort et peut être bloqué sous l'action d'un ressort avec des crans d'arrêt axiaux (18) dans la position de fin de course respective.

9. Dispositif selon la revendication 7, **caractérisé en ce que** le bouton rotatif (14) est doté d'une zone de fixation excentrique pour la deuxième extrémité de l'étrier (11).

10. Dispositif selon la revendication 9, **caractérisé en ce que** la zone de fixation se compose d'une butée articulée qui est dotée d'un disque (12) disposé à rotation sur une enveloppe appliquée excentriquement sur le bouton rotatif (14).

11. Dispositif selon la revendication 9, **caractérisé en ce qu'**un tourillon (130) disposé excentriquement est prévu pour la fixation de la deuxième extrémité de l'étrier (11), tourillon autour duquel l'extrémité de l'étrier (5) fléchie en un collier (110) est tournée.

12. Dispositif selon la revendication 5, **caractérisé en ce que** la deuxième extrémité (11) de l'étrier de protection (5) est prévue dans la zone d'extrémité de la partie en forme d'arc de cercle (6) tandis que la première extrémité (7) est prévue sur un côté (8, 80) fléchi radialement vers l'intérieur par une partie en forme d'arc de cercle (6), lequel couvre la distance par rapport au capot de protection (4).

13. Dispositif selon la revendication 12, **caractérisé en ce que** le capot de protection (4) dans la région de la première extrémité (7) de l'étrier de protection présente une découpe (9) de forme angulaire qui délimite avec le côté de l'étrier (8) adjacent à la première extrémité, une zone dans laquelle le fil coupant n'est pas recouvert.
